# EUROPEAN PATENT APPLICATION

(11) **EP 2 067 760 A1**
(43) Date of publication of application: **10.06.2009**
(21) Application number: 06807957.3
(22) Date of filing: 18.09.2006
(51) Int. Cl.: C05D 9/02, C05C 3/00

(54) **PROCESS FOR OBTAINING FERTILIZERS FROM TIO2 SUBPRODUCTS, AND PRODUCTS OBTAINED IN THIS MANNER**

(71) Applicant: Fertinagro Nutrientes, S.L., 44195 Teruel (ES)
(72) Inventor: ATARES REAL, Sergio, E-TERUEL 44195 (ES)
(74) Representative: Martin Santos, Victoria Sofia
(86) International application number: PCT/ES2006/070137
(87) International publication number: WO 2008/034921

(57) **Abstract**

Process for obtaining fertilizer, and fertilizer, which comprises a stage of neutralizing a subproduct from the process of obtaining titanium dioxide with a content of metal sulphate using ammonia and the addition of water, if necessary.

## Description

### OBJECT OF THE INVENTION

The present invention refers to the process for producing fertilizers and the products produced in this manner.

### BACKGROUND OF THE INVENTION

The process of manufacturing titanium dioxide via sulphate starts from a titanium-rich mineral, mainly from ilmenite or titanium slag.

These raw materials are digested with 80-98% concentrated sulphuric acid.

After successive filtration, crystallization and hydrolysis operations, on the one hand we obtain a hydrolyzate, hydrated titanium dioxide and a liquid stream known as weak acid with metallic sulphates, which mainly contains metallic sulphates, primarily of iron, magnesium and aluminium, and the surplus sulphuric acid that has remained free.

Until 1993, when the European Union prohibited the discharge of this stream into open waters, this was its main destination.

Today there are two main treatments with a few variants:
- neutralization with calcium compounds for obtaining gypsums or with other alkaline materials to form other sulphates (ammonium and/or magnesium).
- recovery and concentration of sulphuric acid.

Neither of the two processes currently used presents an economically effective solution to the problem of how to use the by-products of the titanium dioxide production process.

In the former of the cases a large amount of sulphuric acid is wasted, converting it into an inert but practically valueless product.

In the second alternative, the main problem is the consumption of energy in the system.

Another alternative is to convert this by-product into nitrogenous and complex fertilizers.

The composition of the weak acid with metallic sulphates presents a few elements which are susceptible for use as nutrient elements in complex fertilizers:
- It contains sulphates. Sulphur is a nutrient for plants.
- It contains Fe(II), extremely important for soils, which prevents ferric chlorosis.
- It contains magnesium, a secondary element for complex fertilizers.
- It contains free sulphuric acid which may be used for fixing ammonia or solubilizing nutrients necessary for plants.
- It contains oligoelements necessary for plant development, such as manganese, zinc, copper, etc.

This possibility of converting the by-product of the production of titanium dioxide into fertilizers is described in the patents with publication number ES2036949 and ES2049127, where "metallic sulphates" are neutralized with magnesium oxides or carbonates. This neutralized mixture is combined afterwards with organic matter to produce deficit correctors for crops due to their iron, magnesium and oligoelement content.

Another patent which presents the possibility of extracting fertilizer elements of "weak acid with "metallic sulphates"" is patent US3016286 and an improvement of this CA2130212, where on the basis of neutralizations with ammonia and by means of precipitations and extractions we obtain a solution of ammonium sulphate, which is then crystallized straight from the dilute acid.

In patent US3016286 ammonia is used as the precipitating agent of various double salts for purifying the ammonium sulphate solution, and subsequently to obtain ammonium sulphate. These patents involve highly complicated precipitation, filtration and crystallization steps.

This patent US3016286 describes how neutralization with ammonia provides a series of hydrated double salts of different elements, the most significant and possible being:
- FeSO4·(NH4) 2SO4·6H2O, known as Mohr's salt. It is a highly useful reduction substance for the control of nitrification in fertilizers. It is known that this salt behaves as a nitrification inhibitor.
- MgSO4·(NH4)2SO4·6H2O
- MnSO4·(NH4)2SO4·6H2O
- Fe2 (SO4)3·(NH4) 2SO4·24H2O
- AI2 (SO4)3·(NH4) 2SO4·24H2O

The fact that these salts are formed depends on the concentrations of the ions and on the pH present. Thus, for instance, if the pH is limited to pH 3 and oxidation of the iron (II) is prevented, the double iron (III) salt will not be formed.

All these salts have in common the quantity of crystallization water present in their structure. In this way, this water ranges from being free to being bonded moisture, crystallization water; in this way, these double salts enable the products to be more easily manageable, and the saving of a considerable amount of energy to evaporate it.or dry it.

The present invention sets out to describe a process for producing nitrogenous and complex fertilizers, starting off from a by-product of the production of titanium dioxide and neutralizing it with ammonia, and the fertilizers thus produced.

### DESCRIPTION OF THE INVENTION

The problem that is resolved with the present invention is to provide a use for the by-products that present metallic sulphates generated in the production of titanium dioxide.

The solution is to provide a process for producing fertilizers that make use as their raw material of by-products from the production of titanium dioxide with metallic sulphate content, which are neutralized with ammonia to produce said fertilizers.

In accordance with this, an initial aspect of the invention refers to a process for producing fertilizers which comprises at least the following stages:
- A stage of partial or total neutralization of a by-product of the production of titanium dioxide with metallic sulphate content (iron, magnesium and aluminium sulphates mainly), with ammonia and the addition of water if necessary to reach a liquid phase between 10%-70% so that the reaction is fast enough.
- In the event of starting from an acid with a concentration higher than 40% and carrying out a partial neutralization or from an acid with a concentration of less than 40%, to neutralize (totally or partly) we add a stage of conditioning the product obtained at the previous stage in order to produce the end product. This stage is used to improve the handling and the storage capacity of the material and may comprise the following operations:
   o Mixture with a recycle stream to reduce the moisture and facilitate the handling of the stream.
   o Granulating
   o Drying.
   o Cooling.
   o Size grading.
- Optionally, solid materials may be added that supply all the other nutrients needed for the manufacture of a complex fertilizer, such as potassium chloride, potassium sulphate, monoammonium phosphate, diammonium phosphate, SSP (single super phosphate), TSP (triple super phosphate), magnesium sulphate, dolomite, magnesite, urea, ammonium sulphate, amongst others. In this way, we obtain a complex fertilizer amenable to granulation.

A second aspect of the invention refers to the possible nitrogenous fertilizers produced by the process of the invention with the following:

| Material | Percentage composition by weight |
|---|---|
| Ammonia nitrogen | 4-20% |
| Sulphate (SO3) | 30-45% |
| Fe | 1-15% |
| Mn | 1-2% |
| MgO | 0.15-5% |
| Zn | 0.2-0.3% |
| Cu | 0-0.02% |
| Free water | 3-5% |
| pH | 02/07/09 |

These fertilizers may be presented in powder or in granulate form.

Before a detailed discussion of different embodiments of this invention, we define the specific terms relating to the main aspects of the invention.

In this document the term by-products of the production of titanium with metallic sulphates content denotes by-products that may be obtained from different parts of the titanium dioxide process via sulphate, specifically from streams of dilute sulphuric acid present in the process, which have a concentration between 21-90 %, known as weak acid with metallic sulphates, or a solid by-product known as metallic sulphate.

The term metallic sulphates refers in this document to a solid by-product obtained in re-concentrations and filtrations in the recovery of the dilute sulphuric acid used in the process of producing titanium dioxide via sulphate. The metallic sulphate contains mainly aluminium, iron and magnesium sulphates, although they may also chromium, arsenic, cadmium, mercury, nickel, lead, selenium, antimony, manganese, zinc, titanium, copper, vanadium and sodium sulphates.

In this document the term partial neutralization denotes neutralizing an acid to a pH of between 2-3.

The term total neutralization refers in this document to neutralizing an acid to a pH of between 5-7.

Depending on the stream of the dilute sulphuric acid chosen as the raw material, the addition of water will or will not be necessary to obtain a liquid phase between 10%-70%. This addition may be carried out from dilute process streams and clean water is not necessary.

This content in the liquid phase is important for increasing the reaction rate when the viscosity of the mixture decreases and, therefore, that the rate controlling stage should be the reaction kinetics between the ammonia and the free sulphuric acid.

In the particular case of using the solid by-products known as metallic sulphates and carrying out partial neutralization with ammonia, it is necessary to add a certain amount of water (or dilute acid streams that supply the same amount of water) and as a result the reaction causes the temperature of the mix to rise to approximately 110°C. The mix is a low viscosity fluid and after five minutes stirring an increase in the consistency of this liquid phase takes place until it turns into a solid product. This is due to the formation of hydrated double salts and to the evaporation of a certain part of the water.

Two possibilities are differentiated according to the concentration of the acid that is going to be neutralized and the type of neutralization that may be required.

If the concentration of the acid that is going to be neutralized is more than 40% and the neutralization is to pH 5-7, a sufficient initial liquid phase is obtained in the reactor for the reaction to be fast. As the water evaporates, a solid end product is obtained that is easy to handle.

If we start off from an acid with a concentration of more than 40% but we are going to carry out a partial neutralization or if we start off from an acid of less than 40% to neutralize (totally or partially), the result is that we obtain a liqueur of ammonium sulphate with metallic sulphates of viscous appearance which cannot be handled directly as a solid, but passes to a stage of mixing with solid dry materials to facilitate transport and handling. This mixing stage is carried out with a pugmill type mixer and the solids used as mixing materials are mainly of two types:
Mixing is done with an end product recycle stream to obtain a manageable solid.

Mixing is done with other raw materials to achieve the nutrient richness sought in the complex fertilizer. Without being exclusive, the raw materials that can be added may be potassium chloride, potassium sulphate, monoammonium phosphate, diammonium phosphate, SSP, TSP, magnesium sulphate, magnesite, dolomite, urea, ammonium sulphate. In this way, we can obtain a manageable solid.

In all cases the pugmill output stream has two possibilities: it either enters a granulating cycle or else it is stored and used as powder fertilizer product.

If we carry out a partial neutralization to a pH between 2-3, we obtain a non-corrosive product that is therefore safe to handle, but with a pH sufficiently low to keep iron in its most highly appreciated form in agricultural terms, iron (II). As Mohr's salt is formed, the bonding of 6 hydration molecules takes places in it. This product has highly rated fertilizing properties due to the presence of this Mohr's salt as a nitrification inhibitor.

If a total neutralization is carried out to a pH between 5-7, the Fe(II) is oxidized to Fe(III), so this Mohr's salt is not obtained, although ferric ammonium sulphate is formed, which also contains hydration water.

In all cases the neutralization is carried out in a tank provided with a turbine type mixer and with gas suction and treatment by way of a scrubbing tower so as to capture the possible release of ammonia. After 3-5 minutes' neutralization the fluid passes to a pugmill, where the mixing process continues and there is a possibility of adding a solid product which helps to facilitate handling. The product therefore is converted into an easy-to-handle dusty solid. If it were not put into this pugmill, a step of fusing to solid would take place, which would bring about the appearance of large blocks of product extremely hard to handle. Through being put into the pugmill, the mixing action means that the transition from the fused phase to the solid phase results in a loose semi-granulated product. The approximate dwell time in this mixer is 5 minutes.

The product thus produced may now be handled easily as it is a dry solid and may be stored in this form for later shipment, or else it may be put through a granulating process.

The stream that issued from the pugmill enters the granulator. All the powder product enters a rotary granulator, where the fluids required for granulating (water, steam, sulphuric acid) are added, as well as the recycle that is composed of the material that does not have the right size.

From the granulator the product passes to the dryer, where the moisture content is reduced by means of a stream of air at low temperature. The presence of considerable quantity of hydrated salts means that the temperature of the solid should not be raised above 60°C. Drying should therefore be carried out with a substantial flow of air at low temperature, at the head a maximum of 250°C and at the tail 70°C.

On leaving the dryer, the product is fed into a rotary cooler, wherein the temperature is lowered to under 40°C, and in this way it is stabilized.

The product, now cold and dry, passes to screens for selecting the right size. Oversized product is ground and combined with the smaller-sized product for recirculating and feeding back into the granulator again.

After the bed we pass to a rotary drum, which acts as the end product conditioner. Paraffin coatings are applied here so that the end product storage capacity can be successfully increased.

### DESCRIPTION OF THE DRAWINGS

The present descriptive report is supplemented with a set of drawings, illustrative of the preferred embodiment but never restrictive of the invention.

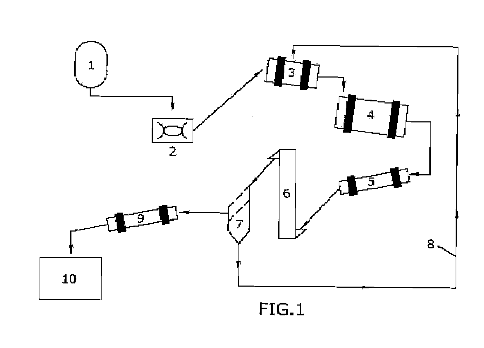

Figure 1 shows a diagram of the process of the invention.

### PREFERRED EMBODIMENT OF THE INVENTION

In a preferred embodiment of the invention the invention was carried on for 8 hours and approximately 200 tons of end product was produced.

As the starting material we took the metallic sulphate that comes as a by-product of the titanium dioxide production process.

The metallic sulphate has the following composition:

| Material | Percentage composition by weight |
|---|---|
| Iron (II)sulphate monohydrate | 57.5% |
| Sulphuric acid | 18% |
| Manganese sulphate | 2.5% |
| Titanium sulphate | 4.5% |
| Silica | 5% |
| Free water | 9.25% |
| Other oxides | 3% |

It is fed into a turbine mixer (1) with a capacity of 2000 I and a rotation speed of 320 rpm, at a flow rate of 20,000 Kg/hr, together with 1200 kg/hr of anhydrous ammonia and 6400 kg/hr of water. A part comes from the scrubbing tower which cleanses the gases from the mixes and granulator (3).

The mix is kept for 4 minutes and is then transferred to a pugmill type mixer (2). In this mixer the product enters a fused phase at an approximate temperature of 105°C. The approximate dwell time is 5 minutes. The solidification of the material takes place and it reaches the pugmill type mixer discharge in a semi-granulate solid phase at an approximate temperature of 80°C.

The product passes to the granulator (3), where a small amount of water and sulphuric acid are added to facilitate granulating. The output temperature from the granulator (3) was approximately 65°C.

From the granulator (3) it passes to the dryer (4), where it is dried with a stream of air with an input temperature of 270°C and an output at 70°C.

When the product issues, it is conveyed to a cooler (5) to bring the temperature down. After the primary cooler the temperature is lowered to 35°C.

The product is introduced by way of an elevator (7) into a double screen (8) with meshes of 5 mm to 1 mm. The recycle returns by way of the recycle line (9) back to the granulator, with an approximate recycle ratio of 1.2 tons of recycle material per ton of end product.

The suitably-sized product is prepared in the conditioner (10) by means of adding paraffin oil and aminated talc and it is stored in tanks (11) for shipment.

The average composition of the product obtained is as follows:

| Material | Percentage composition by weight |
|---|---|
| Ammonia nitrogen | 4.62% |
| Sulphate (SO3) | 42.03% |
| Fe | 16.2% |
| Mn | 1.48% |
| MgO | 0.22% |
| Zn | 0.3% |
| Cu | 0.01% |
| Free water | 4% |
| pH | 3.02 |

The essential nature of this invention is not altered by variations in materials, shape, size and arrangement of the component elements, described for non-restrictive purposes, although this description suffices for it to be reproduced by an expert.

## Claims

1. Process for producing fertilizer that comprises at least:
• a stage of partial or total neutralization of a by-product of the production of titanium dioxide with metallic sulphate content, with ammonia and the addition of water needed to reach a liquid phase between 10%-70% so that the reaction may be fast enough.

2. Process according to claim 1 **characterised in that** after the neutralization stage it presents at least the following stages:
o Granulating
o Drying.
o Cooling.
o Size grading.

3. Process according to claim 1 **characterised in that** the by-product of the production of the titanium starting material has an acid concentration of more than 40%, partial neutralization is carried out and a stage is added consisting of conditioning the product obtained in the previous stage so as to obtain the end product, which comprises the following operations:
o Mixing with a recycle stream to reduce the moisture and facilitate the handling of the stream.
o Granulating.
o Drying.
o Cooling.
o Size grading.

4. Process according to claim 1 **characterised in that** the by-product of the production of the titanium starting material has an acid concentration of less than 40%, partial or total neutralization is carried out, and a stage is added consisting of conditioning the product obtained at the previous stage so as to obtain the end product, which comprises the following operations:
o Mixing with a recycle stream to reduce the moisture and facilitate the handling of the stream.
o Granulating.
o Drying.
o Cooling.
o Size grading.

5. Process according to claim 1, 2, 3 or 4 **characterised in that** solid materials are added that supply the nutrients needed for the manufacture of a complex fertilizer, namely potassium chloride, potassium sulphate, monoammonium phosphate, diammonium phosphate, SSP, TSP, magnesium sulphate, dolomite, magnesite, urea, and ammonium sulphate.

6. Process according to claim 1 **characterised in that**:
• the product obtained at the neutralization stage is put into a pugmill mixer so as to obtain a dusty solid
• the stream that issues from the pugmill enters a rotary granulator, along with the fluids such as the water and sulphuric acid needed to granulate
• from the granulator the product passes to the dryer, and the temperature of the solid should not rise above 60°C
• on leaving the dryer, the product is fed into a rotary cooler, wherein the temperature is lowered to below 40°C
• from the cooler it passes to screens for size grading; the oversized product is ground and combined with the smaller-sized product for recirculating and feeding back into the granulator again
• lastly, it passes to a rotary drum which acts as the end product conditioner.

7. Fertilizer produced according to the foregoing claims 1-6 **characterised in that** the composition of the product obtained is as follows:
| Material | Percentage composition by weight |
|---|---|
| Ammonia nitrogen | 4-20% |
| Sulphate (SO3) | 30-45% |
| Fe | 1-15% |
| Mn | 1-2% |
| MgO | 0.15-5% |
| Zn | 0.2-0.3% |
| Cu | 0-0.02% |
| Free water | 3-5% |
| pH | 2-7 |
